# EUROPEAN PATENT SPECIFICATION

(11) **EP 1 975 481 B1**
(45) Date of publication and mention of the grant of the patent: **21.05.2014**
(21) Application number: 08004767.3
(22) Date of filing: 14.03.2008
(51) Int. Cl.: F16K 15/02, F16K 17/06

(54) **Relief valve for heavy equipment**
Ablassventil für Baumaschinen
Soupape de décharge pour équipement lourd

(30) Priority: 27.03.2007 KR 20070029683
(43) Date of publication of application: 01.10.2008
(73) Proprietor: Volvo Construction Equipment Holding Sweden AB, 631 85 Eskilstuna (SE)
(72) Inventor: Jeon, Man Suk, Changwon Kyungsangnam-do (KR); Kang, Min Heik, Changwon Kyungsangnam-do (KR)
(74) Representative: Schmidt, Sven Hendrik

(56) References cited:
- EP-A1- 0 494 557
- DE-A1- 10 063 153
- GB-A- 999 386

## Description

### BACKGROUND OF THE INVENTION

### Field of the invention

The present invention relates to a relief valve for heavy equipment (heavy construction equipment), which can prevent leakage of oil and damage of an O-ring when pressure is set in order to re-set the set pressure of a relief valve for maintaining a set pressure of a hydraulic circuit.

More particularly, the present invention relates to a relief valve for heavy equipment, which can prevent leakage of oil and loss of components installed in a sleeve due to a secession of a guide that is released when the pressure of a relief valve is set, and can prevent damage of an O-ring mounted to seal a gap between contact surfaces.

### Description of the Prior Art

A relief valve is used to perform a function of maintaining the pressure in a hydraulic circuit below a set pressure value by draining a part or the whole quantity of hydraulic fluid when the pressure in the hydraulic circuit exceeds the set pressure.

In order to improve the operation efficiency during operation, replacement of option devices (e.g., a breaker, a share, and so forth) may be performed, and at this time, it is required to re-set the pressure of the relief valve in accordance with the replaced option devices.

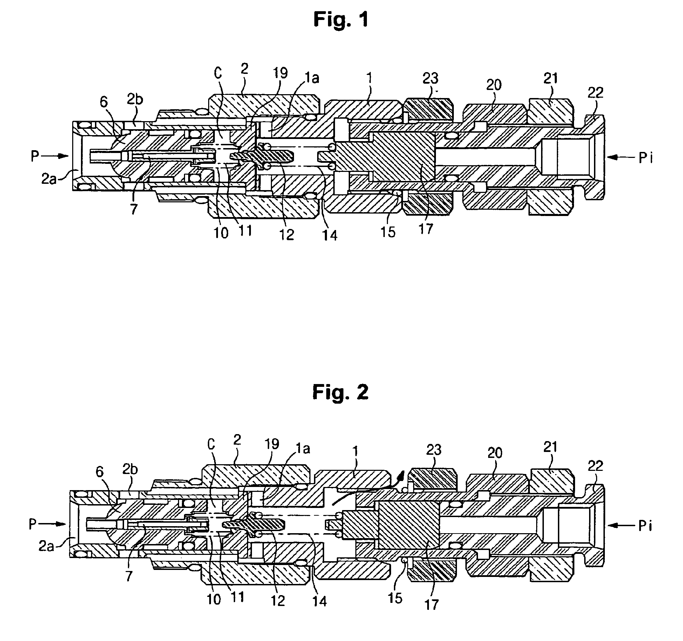

As illustrated in FIGS. 1 and 2, a conventional relief valve includes a sleeve 2 having a pressure chamber c formed therein, an inlet port 2a for an inflow of high-pressure hydraulic fluid from a hydraulic pump P, and a tank flow path 2b for returning the hydraulic fluid in the inlet port 2a to a hydraulic tank; a poppet 6 engaged inside the sleeve 2 to open/close a flow path between the inlet port 2a and the tank flow path 2b; a poppet spring 10 for elastically supporting the flow path between the inlet port 2a and the tank flow path 2b in a closed state by pressing the poppet 6; a valve sheet 19 installed opposite to the poppet 6 to maintain a set pressure in the pressure chamber c; a pilot poppet 12 for draining the hydraulic fluid in the pressure chamber c to the hydraulic tank by opening a flow path of the valve sheet 19 when a high pressure that exceeds the set pressure is generated; a pilot poppet spring 14 for elastically supporting the flow path of the valve sheet 19 in a closed state by pressing the pilot poppet 12; a piston 7 for moving inside the poppet 6 by a hydraulic pressure of the hydraulic pump P and being in contact with the pilot poppet 12; a piston spring 11 for elastically supporting the piston 7 against the valve sheet 19; a plug 1 screw-engaged inside the sleeve 7 and having a tank inlet 1a formed thereon to connect to the tank flow path 2b; a guide 20 screw-engaged inside the plug 1 and having an O-ring 15 mounted thereon to seal a gap between contact surfaces with the plug 1; a main piston 17 for variably controlling the set pressure in the pressure chamber c by pressing the pilot poppet 12 when a pilot signal pressure Pi is supplied from an outside; a control plug 22 screw-engaged inside the guide 20 and receiving an inflow of the pilot signal pressure Pi; and fastening nuts 21 and 23 fixed to the control plug 22 and the guide 20, respectively, to prevent the change of the set pressure in the pressure chamber c.

The technology of discharging the high-pressure hydraulic fluid from the hydraulic pump P to the hydraulic tank and controlling the set pressure formed in the pressure chamber c by pressing the pilot poppet 12 with the pilot signal pressure Pi being supplied through the control plug 22 is well known in the art, and thus the detailed description thereof will be omitted.

In case of setting the pressure in order to re-set the set pressure of the relief valve, the fastening nuts 21 and 23 are partly released, and then the pressing force that presses the pilot poppet spring 14 is lowered (i.e., the compression force of the pilot poppet spring 14 is weakened) by rotating the guide 20 screw-engaged with the plug 1 counterclockwise.

As the guide 20 screw-engaged with the plug 1 is slowly rotated clockwise, the pressure is set. After the pressure of the valve is re-set, the fastening nuts 23 and 21 are fastened.

At this time, if the guide 20 completely secedes from the plug 1, the pilot poppet 12 and/or pilot poppet spring 14 installed inside the sleeve 2 may be lost.

In addition, the hydraulic fluid may leak from the sleeve 2 and the plug 1 (as indicated as an arrow in FIG. 2) (in the case of setting the pressure in order to re-set the set pressure of the valve, the engine is in operation).

As illustrated in FIG. 2, even in the case where the guide 20 does not completely secede from the plug 1, the O-ring 15 that is mounted to seal the gap between the plug 1 and the guide 20 secedes from the contact surfaces due to the release of the guide 20. Accordingly, the hydraulic fluid may leak from the plug 1.

By fixing the guide 20 screw-engaged with the plug 1 at its initial position in a state that the O-ring 15 has seceded from the contact surfaces, the O-ring 15 is mounted again on the contact surfaces.

At this time, the O-ring 15 may be damaged due to an incomplete contact with the contact surfaces. Due to the damaged O-ring 15, the hydraulic fluid may leak during the operation of the relief valve.

Document DE 10063153 discloses another relief valve for heavy equipment.

### SUMMARY OF THE INVENTION

Accordingly, the present invention has been made to solve the above-mentioned problems occurring in the prior art while advantages achieved by the prior art are maintained intact.

One object of the present invention is to provide a relief valve for heavy equipment, which can prevent leakage of oil and loss of components installed in a sleeve, and can prevent an incomplete contact of an O-ring with contact surfaces when pressure is set in order to re-set the set pressure of a relief valve.

In order to accomplish the object, there is provided a relief valve for heavy equipment, according to an embodiment of the present invention, which includes a sleeve having an inlet port formed thereon to pass therethrough an inflow of hydraulic fluid from a hydraulic pump, and a tank flow path formed therein to return the hydraulic fluid in the inlet port to a hydraulic tank; a poppet engaged inside the sleeve to open/close a flow path between the inlet port and the tank flow path; a valve sheet installed opposite to the poppet to form a set pressure in a pressure chamber of the sleeve; a pilot poppet for draining the hydraulic fluid in the pressure chamber to the hydraulic tank by opening a flow path of the valve sheet when a high pressure that exceeds the set pressure is generated in the pressure chamber; a plug screw-engaged inside the sleeve and having a tank inlet formed thereon to connect to the tank flow path; a guide screw-engaged inside the plug, and having an O-ring mounted on an outer surface thereof to seal a gap between contact surfaces with the plug and a step portion formed on the outer surface thereof; a main piston for variably controlling the set pressure in the pressure chamber by pressing the pilot poppet when a pilot signal pressure is supplied from an outside; a control plug screw-engaged inside the guide and receiving an inflow of the pilot signal pressure; and a stopper for preventing a secession of the guide from the plug by supporting the step portion when the guide is released from the plug in order to set the set pressure of the valve.

A fixing bolt engaged in a screw hole formed on the plug may be used as the stopper.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view of a conventional relief valve for heavy equipment;
FIG. 2 is a view explaining releasing and fixing of a guide in order to set the pressure of a valve due to replacement of an option device in a conventional relief valve;
FIG. 3 is a schematic view of a relief valve for heavy equipment according to an embodiment of the present invention;
FIG. 4 is a view explaining releasing and fixing of a guide in order to set the pressure of a valve due to replacement of an option device in a relief valve according to an embodiment of the present invention; and
FIG. 5 is a sectional view of a main part of a relief valve for heavy equipment according to an embodiment of the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

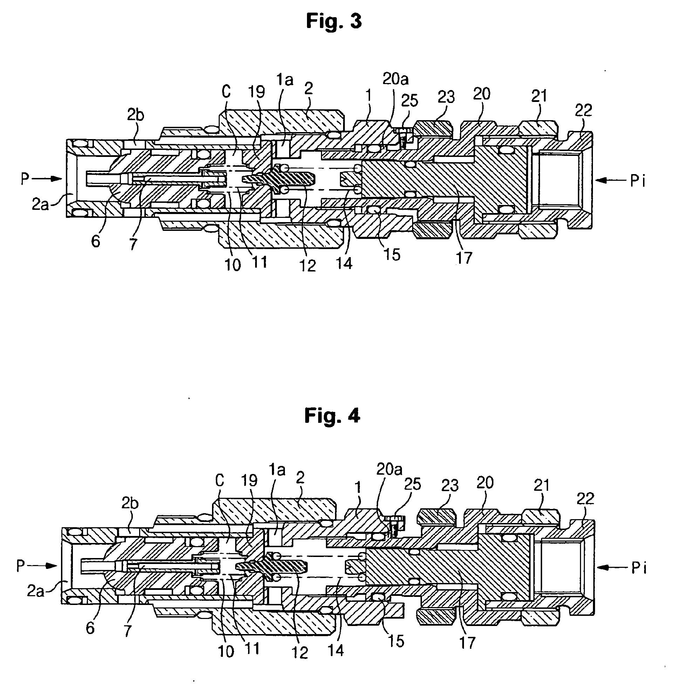

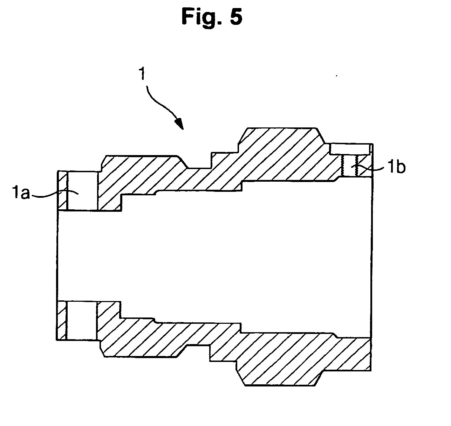

As illustrated in FIGS. 3 to 5, a relief valve for heavy equipment according to an embodiment of the present invention includes a sleeve 2 having an inlet port 2a formed thereon to pass therethrough an inflow of hydraulic fluid from a hydraulic pump P, and a tank flow path 2b formed therein to return the hydraulic fluid in the inlet port 2a to a hydraulic tank; a poppet 6 engaged inside the sleeve 2 to open/close a flow path between the inlet port 2a and the tank flow path 2b; a valve sheet 19 installed opposite to the poppet 6 to form a set pressure in a pressure chamber c of the sleeve; a pilot poppet 12 for draining the hydraulic fluid in the pressure chamber c to the hydraulic tank by opening a flow path of the valve sheet 19 when a high pressure that exceeds the set pressure is generated in the pressure chamber c; a plug 1 screw-engaged inside the sleeve 2 and having a tank inlet 1a formed thereon to connect to the tank flow path 2b; a guide 20 screw-engaged inside the plug 1, and having an O-ring 15 mounted on an outer surface thereof to seal a gap between contact surfaces with the plug 1 and a step portion 20a formed on the outer surface thereof; a main piston 17 for variably controlling the set pressure in the pressure chamber c by pressing the pilot poppet 12 when a pilot signal pressure Pi is supplied from an outside; a control plug 22 screw-engaged inside the guide 20 and receiving an inflow of the pilot signal pressure; and a stopper 25 for preventing a secession of the guide 20 from the plug 1 by supporting the step portion 20a when the guide 20 is released from the plug 1 in order to set the set pressure of the valve.

A fixing bolt screw-engaged in a screw hole 1b formed on the plug 1 is used as the stopper 25.

The construction of a relief valve except for the plug 1 having the stopper 25 mounted thereon to prevent a secession of the guide 20 from the plug 1, is substantially equal to the construction of the relief valve as illustrated in FIG. 1, and thus the detailed description thereof will be omitted. The same drawing reference numerals are used for the same elements across various figures.

In the drawing, the reference numeral "10" denotes a poppet spring for elastically supporting the flow path between the inlet port 2a and the tank flow path 2b in a closed state by pressing the poppet 6, and the reference numeral "14" denotes a pilot poppet spring for elastically supporting the flow path of the valve sheet 19 in a closed state by pressing the pilot poppet 12.

Hereinafter, the operation of the relief valve for heavy equipment according to an embodiment of the present invention will be described.

In order to improve the operation efficiency during operation using an excavator, replacement of option devices (e.g., a breaker, a share, and so forth) may be performed, and at this time, it is required to re-set the pressure of the relief valve in accordance with the replaced option devices.

As illustrated in FIG. 4, in the case of re-setting the set pressure of the relief valve, the guide 20 and the control plug 22 are released from each other for a predetermined distance by rotating the fastening nuts 23 and 21 screw-engaged with the guide 20 and the control plug 22 counterclockwise (in the drawing, in a right direction), and then the guide 20 is released from the plug 1 (i.e., the compression force of the pilot poppet spring 14 is weakened) by rotating the guide 20 screw-engaged with the plug 1 counterclockwise.

If the guide 20 is continuously rotated counterclockwise, the step portion 20a of the guide 20 being released from the plug 1 is supported by the stopper 25. Accordingly, the guide 20 is not completely separated from the plug 1, and thus the leakage of oil due to the secession of the guide 20 from the plug 1 is prevented.

Even in the case where the guide 20 is released from the plug 1 for a predetermined distance, the O-ring 15 is prevented from seceding from the contact surfaces (i.e., in the case of releasing the guide 20, the O-ring 15 is kept in a groove of the guide 20).

Also, even in the case of engaging the guide 20 with the plug 1 after the re-setting of the pressure of the valve, the damage of the O-ring 15 due to an incomplete contact with the contact surfaces can be prevented.

Accordingly, as the guide 20 is slowly rotated clockwise, the set pressure of the relief valve is re-set. After the re-setting of the set pressure of the relief valve, the fastening nuts 23 and 21 are fastened.

As described above, the relief valve for heavy equipment according to the embodiment of the present invention has the following advantages.

In the case of setting the pressure in order to re-set the set pressure of a relief valve, leakage of oil and loss of components installed in the sleeve due to a secession of the guide can be prevented. Also, the O-ring is prevented from seceding from the contact surfaces and thus damage of the O-ring due to an incomplete contact with the contact surfaces can be prevented.

Although preferred embodiment of the present invention has been described for illustrative purposes, those skilled in the art will appreciate that various modifications, additions and substitutions are possible, without departing from the scope of the invention as disclosed in the accompanying claims.

## Claims

1. A relief valve for heavy equipment, comprising:
a sleeve (2) having an inlet port (2a) formed thereon to pass therethrough an inflow of hydraulic fluid from a hydraulic pump (P), and a tank flow path (2b) formed therein to return the hydraulic fluid in the inlet port (2a) to a hydraulic tank;
a poppet (6) engaged inside the sleeve (2) to open/close a flow path between the inlet port (2a) and the tank flow path (2b);
a valve sheet (19) installed opposite to the poppet (6) to form a set pressure in a pressure chamber (c) of the sleeve (2);
a pilot poppet (12) for draining the hydraulic fluid in the pressure chamber (c) to the hydraulic tank by opening a flow path of the valve sheet (19) when a high pressure that exceeds the set pressure is generated in the pressure chamber (c);
a plug (1) screw-engaged inside the sleeve (2) and having a tank inlet formed thereon to connect to the tank flow path (2b);
a guide (20) screw-engaged inside the plug (1), and having an O-ring (15) mounted on an outer surface thereof to seal a gap between contact surfaces with the plug (1) and a step portion (20a) formed on the outer surface thereof;
a main piston (17) for variably controlling the set pressure in the pressure chamber (c) by pressing the pilot poppet (12) when a pilot signal pressure (Pi) is supplied from an outside;
a control plug (22) screw-engaged inside the guide (20) and receiving an inflow of the pilot signal pressure; and
a stopper (25) for preventing a secession of the guide (20) from the plug (1) by supporting the step portion (20a) when the guide (20) is released from the plug (1) in order to set the set pressure of the valve.

2. The relief valve of claim 1, wherein a fixing bolt engaged in a screw hole (1b) formed on the plug (1) is used as the stopper (25).

## Patentansprüche

1. Entlastungsventil für Baumaschinen, umfassend:
eine Hülse (2) mit einer darauf ausgebildeten Einlassöffnung (2a), um dadurch einen Zustrom an Hydraulikmedium aus einer Hydraulikpumpe (P) fließen zu lassen, und einen darin ausgebildeten Behälterströmungsweg (3b), um das Hydraulikmedium aus der Einlassöffnung (2a) zu einem Hydraulikbehälter zurückzuführen;
einen Kolben (6), der in die Hülse (2) eingebracht ist, um einen Strömungsweg zwischen der Einlassöffnung (2a) und dem Behälterströmungsweg (2b) zu öffnen/schließen;
eine Ventilplatte (19), die entgegengesetzt zu dem Kolben (6) angeordnet ist, um einen vorgegebenen Druck in einer Druckkammer (c) der Hülse (2) auszubilden;
einen Vorsteuerkolben (12), zur Ableitung des Hydraulikmediums in der Druckkammer (c) in den Hydraulikbehälter, durch Öffnen eines Strömungswegs der Ventilplatte (19), wenn ein den vorgegebenen Druck übersteigenden Hockdruck in der Druckkammer (c) erzeugt wird;
einen Stopfen (1), der innerhalb der Hülse (2) eingeschraubt ist und eine darauf ausgebildete Behälteröffnung aufweist, um den Behälterströmungsweg (2b) anzuschließen;
ein Führungsstück (20), das innerhalb des Stopfens (1) eingeschraubt ist und einen an einer Außenfläche dessen angebrachten O-Ring (15) aufweist, um einen Spalt zwischen den Angriffsflächen mit dem Stopfen (1) und einem an der Außenfläche dessen ausgebildeten Stufenteil (20a) zu verschließen;
einen Hauptkolben (17) zur variablen Steuerung des vorgegebenen Drucks in der Druckkammer (c) durch Drücken des Vorsteuerkolbens (12), wenn ein Steuersignaldruck (Pi) vom Außen zugeführt wird;
einen Steuerstopfen (22), der innerhalb des Führungsstücks (20) eingeschraubt ist und einen Zustrom des Steuersignaldrucks empfängt; und
einen Stopper (29), um ein Lösen des Führungsstücks (20) aus dem Stopfen (1) zu verhindern durch Unterstützen des Stufenteils (20a), wenn das Führungsstück (20) vom Stopfen (1) freigegeben wird, um den bestimmten Druck des Ventils einzustellen.

2. Entlastungsventil nach Anspruch 1, wobei ein Befestigungsbolzen, der in ein am Stopfen (1) ausgebildetes Schraubenloch (1b) eingreift, als der Stopper (25) angewendet wird.

## Revendications

1. Détendeur pour équipement lourd, comprenant:
un manchon (2) ayant un orifice d'entrée (2a) formé sur celui-ci pour faire passer à travers un écoulement d'entrée de fluide hydraulique provenant d'une pompe hydraulique (P), et un circuit d'écoulement de réservoir (2b) formé dans celui-ci pour ramener le fluide hydraulique dans l'orifice d'entrée (2a) vers un réservoir hydraulique;
un piston (6) engagé dans le manchon (2) pour ouvrir/fermer un circuit d'écoulement entre l'orifice d'entrée (2a) et le circuit d'écoulement du réservoir (2b) ;
une plaque de soupape (19) installée en face du cône de soupape (6) pour constituer une pression définie dans une chambre de pression (c) du manchon (2);
un piston pilote (12) pour assurer le drainage du fluide hydraulique dans la chambre de pression (c) vers le réservoir hydraulique en ouvrant un circuit d'écoulement de la plaque de soupape (19) lorsqu'une haute pression dépassant la pression définie est produite dans la chambre de pression (c);
un bouchon (1) vissé dans le manchon (2) et comportant un orifice de réservoir formé sur celui-ci pour se raccorder au circuit d'écoulement du réservoir (2b) ;
un guide (20 vissé à l'intérieur du bouchon (1) et présentant un joint torique (15) monté à la surface externe de celui-ci permettant d'étanchéifier un espace entre des surfaces de contact avec le bouchon (1) et une partie en gradin (20a) formée à la surface externe de celui-ci;
un piston principal (17) pour assurer la commande variable de la pression définie dans la chambre de pression(c) en appuyant sur le cône de soupape pilote (12) lorsqu'une pression de signal pilote (Pi) est introduire de l'extérieur ;
un bouchon de commande (22) vissé à l'intérieur du guide (22) et recevant un écoulement d'entrée de la pression de signal pilote ; et
un bouchon de fermeture (29) destiné à empêcher le guide (20) de se dégager du bouchon (1) en soutenant la partie en gradin (20a) lorsque le guide (20) est libéré du bouchon (1) afin de régler la pression voulue de la soupape.

2. Détendeur selon la revendication 1, dans lequel un boulon de fixation engagée dans un trou de vis (1b) formé sur le bouchon (1) sert de bouchon de fermeture (25).
